Europäisches Patentamt

European Patent Office

Office européen des brevets

(11) Publication number: 0 364 948 A2

# EUROPEAN PATENT APPLICATION

(21) Application number: 89119253.6

(22) Date of filing: 17.10.89

(51) Int. Cl.⁵: G01N 27/416

(30) Priority: 21.10.88 JP 265802/88

(43) Date of publication of application:
25.04.90 Bulletin 90/17

(84) Designated Contracting States:
DE FR

(71) Applicant: HITACHI, LTD.
6, Kanda Surugadai 4-chome Chiyoda-ku
Tokyo(JP)

Applicant: Hitachi Instrument Engineering
Co., Ltd.
882, Ichige
Katsuta-shi Ibaraki-ken(JP)

(72) Inventor: Niiyama, Yasushi
Akebonoryo, 663 Ichige
Katsuta-shi(JP)
Inventor: Hattori, Mitsuo
1210-44, Tabiko
Katsuta-shi(JP)
Inventor: Sugahara, Kenshi
3449-18, Higashiishikawa
Katsuta-shi(JP)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
D-8000 München 86(DE)

(54) Method for calibration of electrodes for determining gases and ions in blood sample and reference solutions used therefor.

(57) A plurality of electrodes in one apparatus for determining pH, $pCO_2$ and $pO_2$ gases and sodium, potassium and chlorine ions in blood sample are concurrently calibrated with a specific pH buffer solution. Such simultaneous calibration of a plurality of electrodes can reduce the size of apparatus, increase in ability of treating specimens due to reduction in time required for calibration, and reduction of failure due to simplification of channels for the apparatus.

FIG. I

# METHOD FOR CALIBRATION OF ELECTRODES FOR DETERMINING GASES AND IONS IN BLOOD SAMPLE AND REFERENCE SOLUTIONS USED THEREFOR

## 1 BACKGROUND OF THE INVENTION

### Field of the Invention

The present invention relates to a method for the concurrent calibration of a plurality of electrodes in an apparatus for determining a gas/ion concentration in a blood sample, and to reference solutions used therefor.

### Statement of the Related Art:

An apparatus for determining gases/ions in a blood sample using an electrode method has been heretofore so constructed solely for the restricted purpose of analysis. Namely, there have been an apparatus only for determinations of pH and partial pressures of carbon dioxide and oxygen which is equipped with pH electrodes and the respective electrodes for $pCO_2$ and $pO_2$, an apparatus only for determination of ion activaties of $Na^+$, $K^+$ and $Cl^-$ in a bload sample which is equipped with the respective ion selective electrodes for sodium, potassium and chlorine; and the like. Also as a reference solution used for calibration of each electrode, the solution developed solely for the apparatus has been used but has no compatibility with a reference solution used for another apparatus (of., J. Clin. Chem. Clinicalbiochem., 16, 1978, No. 3, p175-185, U.S. Patent Application No. 4,001,142, Japanese Patent Application KOKAI (Laid-Open to Public Inspection) No. 61-231453).

In diagnosis of patient's conditions and treatments of diseases based on the measurement data for concentrations of the respective components in blood, it was conventional in the prior art to determine gases alone in blood or electrolytes alone or the like. In recent years, however, a strong tendency to simultaneosuly determine these items and make collective diagnosis using much more information has been seen, without determining the respective items independently. With this tendency, there has been lately increasing a demand on an apparatus having functions to concurrently determine the concentrations of multiple components such as pH, $pCO_2$, $pO_2$, $Na^+$, $K^+$, $Cl^-$, etc. in blood, going beyond the limit of conventional apparatuses. When an apparatus of this type is constructed, the existing electrodes for determining concentrations of the respective components are usable but any reference solution capable of concurrently calibrating the respective electrodes is not yet commercially available. It has thus been desired to develop a novel reference solution suited for the purpose and a method for the concurrent calibration of the respective electrodes using the same.

That is, in an apparatus for concurrently determining pH and concentrations of various gaseous components and ion components in blood sample, each electrode should be calibrated by a reference solution showing a specific known level to the electrode in a definite interval, as in apparatuses comprising other electrodes for electrochemical determination. In general, an electrode is calibrated by two reference solutions. In preparing a calibration curve, when an apparatus is constructed using reference solutions in the prior art; 2 reference solutions for the electrodes for determination of pH level and concentration of each gaseous component and further 2 reference solutions for the electrodes for determining each ion component, that is, 4 reference solutions in total are required for the calibration. In this case, however, the reference solutions for the electrode for determination of pH level and concentration of each gaseous component contaminate the electrode for determination of concentration of each ion component. Conversely, the reference solution for the electrode for determination of concentration of each ion component contaminates the electrode for determination of pH level and concentration of each gaseous component, thereby to cause measurement error on the electrodes due to carry-over. Therefore, in order to ensure a constant efficiency for apparatus, it is necessary to increase the amount of each reference solution for replacement of channel, which leads to an increase of the amount of reagent. Furthermore, a mechanism and sequence for introducing the reference solution into the channel, in which each electrode is placed, becomes complicated, so that a period of time for calibration is prolonged. Thus, problems of reduction in the ability of treating specimens and complicated maintenance are involved. Furthermore, in these reference solutions used for calibration of electrochemical electrodes, it is required that there is reproducibility in liquid-liquid potential difference from a potent KCl solution used as an electrolytic solution of the standard electrode system. Particularly, in the measurement of undiluted blood, it is preferred that the reference solution be similar to that in blood. However, the reference solution provided by the prior art does not meet such requirements.

## SUMMARY OF THE INVENTION

An object of the present invention is to provide a method for the concurrent calibration of electrodes for determining gases/ions in blood sample which can calibrate several electrodes concurrently and can simplify channels for the apparatus. Another object of the present invention is to provide a reference solution which is suited for the method.

In order to achieve these objects, the present invention provides a method for the concurrent calibration of electrodes in an apparatus for determining gases/ions in blood sample comprising at least one selected from a pH electrode and a $pCO_2$ and $pO_2$ gas electrodes; and at least one selected from ion selective electordes for sodium, potassium and chlorine, wherein the calibrations are concurrently performed for at least one selected from said pH electrode and gas electrodes; and at least one selected from ion selective electrodes, using a pH buffer solution having definite activities of at least one selected from sodium, potassium and chloride ions at a specific temperature which is saturated or unsaturated with specific amounts of carbon dioxide gas and/or oxygen gas and pH value of which is within a range of 6.0 to 9.0 at about 37°C; and further provides a reference solution used for the method, which is a pH buffer solution containing definite activities of at least one selected from sodium, pottasium and chloride ions at a specific temperature which is saturated or unsaturated with specific amounts of carbon dioxide and/or oxygen gas, and pH value of which is within a range of 6.0 to 9.0 at about 37°C.

## BRIEF DESCRIPTION OF THE DRAWINGS

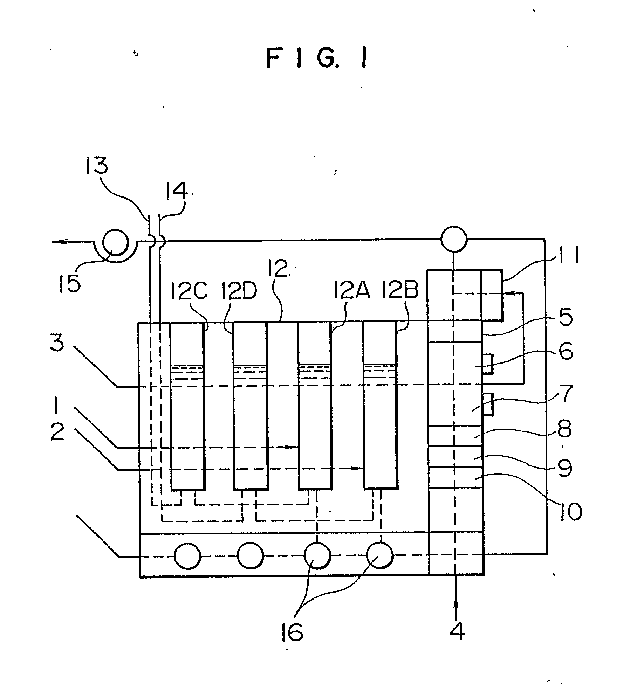

Fig. 1 is a block diagram showing an embodiment of the method and reference solution for concurrent calibration of electrodes for determining gases/ions in blood sample according to the present invention. In the block diagram, symbols denote the following:

1 ... reference solution A
2 ... reference solution B
3 ... electrode solution for comparison
4 ... inlet for sample
5 ... pH electrode
6 ... $pCO_2$ electrode
7 ... $pO_2$ electrode
8 ... $Na^+$ electrode
9 ... $K^+$ electrode
10 ... $Cl^-$ electrode
11 ... reference electrode
12 ... temperature-controlled specimen bubbler
13 ... high pressure gas cylinder 1
14 ... high pressure gas cylinder 2
15 ... peristaltic pump
16 ... electromagnetic valve

## DESCRIPTION OF THE PREFERRED EMBODIMENTS

The reference solution designed as described above is preferably a pH buffer solution inorganic acids including ion species of analytes and salts thereof (especially phosphate and bicarbonate buffer systems) as well as neutral salts. Therefore, the reference solution can maintain stable efficiency over long periods of time without contaminating ion selective electrodes and dissolving out ion selective substances in the electrode membrane.

Since pH level of blood to be analyzed in the apparatus using the reference solution is usually about 7.4, the reference solution used for determining pH level of blood has preferably a strong buffering force preferably at pH of about 7.4. In this case, phosphate buffer and bicarbonate buffer are best suited for constructing the reference solution showing pH of about 7.4 since these buffer solutions have pK values of

3

6.86 (25 °C) and 6.34 (25 °C), respectively.

Furthermore, these pH buffer solutions tend to be readily affected by partial pressure of carbon dioxide gas in the atmosphere so that its pH value is easily changeable by dissolution of carbon dioxide gas into the buffer solution; however, by saturating the pH buffer solution with a gaseous mixture containing specific concentrations of carbon dioxide gas and oxygen gas (especially containing at most 15% of carbon dioxide gas and 5 to 30% of oxygen gas), the pH value can be always kept constant. At the same time, the reference solution can also be used not only for the pH electrode but also for calibration of the respective electrodes for $pCO_2$ and $pO_2$.

The ionic strength of blood is approximately 0.16. By constructing the composition of the reference solution to contain ion species of analytes and setting the ionic strength at 0.15 to 0.17, the reference solution can be commonly used for calibration of the respective ion selective electrodes for sodium, potassium and chlorine. In addition, the liquid-liquid potential difference incurred between the reference solution and strong KCl solution used as an electrolytic solution of the standard electrode system can be kept substantially constant (an order of 0.5 mV) and hence, stable measurement data can always be obtained.

Thus, the reference solution in accordance with the present invention makes it possible to concurrently calibrate the pH electrode, gas electrodes and ion selective electrodes with the least kind of reference solutions, without deteriorating these electrodes. Therefore, reduction in consumption amounts of reagents, simplification of the apparatus, shortening of time required for calibration and improved ability of measurement accompanied thereby can easily be achieved by the present invention.

Hereafter, the present invention is described with reference to one embodiment by referring to Fig. 1. Fig. 1 is outlined channels showing an embodiment of the apparatus for determining pH, partial gas pressure and ion activity of blood sample using the reference solution in accordance with the present invention. Numeral 12 denotes a temperature-controlled specimen bubbler, in which containers 12A through 12D are located. Among the containers, 12A and 12B are charged with reference solution Al and reference solution B2, respectively; the remaining containers 12C and 12D are charged with water.

On the other hand, gas supplied from high pressure gas cylinder A causes bubbling in the container 12C charged with water and is led to container 12A charged with the reference solution A1 therethrough. Further the gas supplied from high pressure gas cylinder B causes bubbling in the container 12D charged with water and is led to container 12B charged with the reference solution A2 therethrough.

The respective reference solutions A1 and A2 are led, via electromagnetic valve 16, respectively, within channels which pass through $Cl^-$ electrode 10, $K^+$ electrode 9, $Na^+$ electrode 8, $pO_2$ electrode 7, pH electrode and comparison electrode 11. To lead into the channels is effected by driving of perista pump 15 shown in the figure.

The channels into the $Cl^-$ electrode 10, $K^+$ electrode 9, etc. are equipped with specimen inlet 4.

In this construction, the reference solutions A1 and B2, which are led into the containers 12A and 12B in the temperature-controlled specimen bubbler 12, are saturated with the gaseous mixture supplied from the high pressure gas cylinders A and B. The reference solutions A1 and B2 saturated with the gaseous mixture are introduced into the channels in which the pH electrode 5 through $Cl^-$ electrode 10 are located and make simultaneous calibration of each of the pH electrode 5 through $Cl^-$ electrode 10. The reference solutions A1 and B2 are introduced into the respective electrodes through the electromagnetic valve 16 and the perista pump 15.

Further a similar reference solution (generally sealed in a glass ampoule) prepared outside the apparatus is introduced from specimen inlet 4 into channels in which the respective electrodes described above are set up, whereby calibration is concurrently made. The calibration of the respective electrodes is made to confirm daily efficiency of the apparatus.

The reference solution is described in more detail. The reference solution is preferably prepared by saturating the pH buffer solution containing inorganic acids including ion species of analytes and salts thereof (especially bicarbonate buffer system) as well as neutral salts with a gaseous mixture containing a specific concentration (at most 15%) of carbon dioxide gas and a specific concentration (5 to 30%) of oxygen gas. The saturation is performed at a specific temperature, thereby to adjust its pH in the range of from 6.0 to 9.0 at 37 °C.

Next, the concentration of each component in the reference solution is generally set around the concentration of each component in blood. Standard levels are set as shown in Table 1.

Table 1

| Item | |
|---|---|
| Concentration | Standard Level |
| pH | 7.38 - 7.42 |
| $pCO_2$ | 37 - 43 mmHg |
| $pO_2$ | 95 - 105 mmHg |
| $Na^+$ | 135 - 145 mM/$l$ |
| $K^+$ | 4 - 5 mM/$l$ |
| $Cl^-$ | 95 - 105 mM/$l$ |
| (Each ion concentration was determined by flame photometery.) | |

In order to more improve reproducibility and calibration or set the ion strength at about 0.16 (desirably 0.15 to 0.17), the composition for each of reference solutions A and B is determined as shown in Table 2.

Table 2

| Item | | |
|---|---|---|
| Concentration | Reference Solution 1 | Reference Solution 2 |
| pH | 6.84 | 7.38 |
| $pCO_2$ | 80.0 | 40.0 |
| $pO_2$ | 100.0 | 100.0 |
| $Na^+$ | 108.0 | 150.0 |
| $K^+$ | 10.0 | 5.0 |
| $Cl^-$ | 75.0 | 108.0 |
| (Each ion concentration was set by taking into account error caused depending upon concentration of protein.) | | |

More specifically, the pH levels are set to 6.84 and 7.38, respectively, as shown in Table 2 above when saturated with the specific concentration of carbon dioxide gas, firstly by using $Na_2HPO_4$ and $NaH_2PO_4$ in the phosphate buffer system and $NaHCO_3$ in the bicarbonate buffer system as the pH buffer solution. Subsequently, NaCl, KCl, LiCl, etc. are suitably added as neutral salts for controlling the concentration and ion strength of the respective ion species of analytes.

The thus prepared reference solution A and reference solution B are free of concentration change in the components with passage of time and can thus be stably used over long periods of time for calibration of a plurality of electrodes for determining the concentrations of the components.

According to the embodiment described above, the pH electrode, gas electrodes for $pCO_2$ and $pO_2$ and ion selective electrodes for sodium, potassium and chlorine can be calibrated at the same time, with the reference solutions of the least kind. Therefore, the present invention can readily achieve reduction of reagents in kind and amounts used for the apparatus to the half, increase in ability of treating specimens due to reduction in time required for calibration (12 specimens/hr to 18 specimens/hr), miniaturization of apparatus and reduction of failure due to simplification of channels for apparatus.

As is evident from the foregoing description, according to the method of the present invention for concurrent calibration of electrodes for determining gases/ions in blood sample and the reference solution used for the method, several kinds of electrode can be calibrated at the same time, resulting in simplification of channels for the apparatus.

EP 0 364 948 A2

## Claims

1. A method for the concurrent calibration of electrodes in an apparatus for determining gases/ions in blood sample comprising at least one selected from a pH electrode and a $pCO_2$ and $pO_2$ gas electrodes; and at least one selected from ion selective electrodes for sodium, potassium and chlorine, wherein the calibrations are concurrently performed for at least one selected from said pH electrode and gas electrodes; and at least one selected from said ion selective electrodes, using a pH buffer solution having definite activities of at least one selected from sodium, potassium and chlorine ions at a specific temperature which is saturated or unsaturated with specific concentrations of carbon dioxide gas and/or oxygen gas and pH value of which is within a range of 6.0 to 9.0 at about 37°C.

2. A method for the concurrent calibration of electrodes according to claim 1, wherein the calibrations are concurrently performed for said pH electrode, gas electrodes and ion selective electrodes, using a pH buffer solution having definite activites of sodium, potassium and chlorine ions at a specific temperature which is saturated with specific concentrations of carbon dioxide gas and oxygen gas.

3. A method for the concurrent calibration of electrodes according to claim 1, wherein said pH buffer solution contains ion species of analytes and is composed of an inorganic acid having a pK value in a range of from 6.0 to 9.0 at 37°C and a salt thereof as well as a neutral salt.

4. A method for the concurrent calibration of electrodes according to claim 1, wherein said pH buffer solution is saturated with a gaseous mixture having a at most 15% carbon dioxide gas concentration and a 5 to 30% oxygen gas concentration.

5. A reference solution for the concurrent calibration of electrodes for determining gases/ions in blood sample, which is a pH buffer solution containing definite activities of at least one selected from sodium, potassium and chlorine ions at a specific temperature which is saturated or unsaturated with specific concentrations of carbon dioxide gas and/or oxygen gas and pH value of which is adjusted to be within a range of 6.0 to 9.0 at about 37°C.

6. A reference solution for the concurrent calibration of electrodes according to claim 5, wherein said pH buffer solution contains definite activities of sodium, potassium and chlorine ions at a specific temperature and is saturated with specific concentrations of carbon dioxide gas and oxygen gas.

7. A reference solution for the concurrent calibration of electrodes according to claim 5, wherein said pH buffer solution contains ion species of analytes and is composed of an inorganic acid having pK in a range of from 6.0 to 9.0 at 37°C and a salt thereof as well as a neutral salt.

8. A reference solution for the concurrent calibration of electrodes according to claim 5, wherein said pH buffer solution is saturated with a gaseous mixture having a most 15% carbon dioxide gas concentration and a 5 to 30% oxygen gas concentration.

9. A reference solution for the concurrent calibration of electrodes according to claim 7, wherein said inorganic acid and salt thereof are selected from the phosphate buffer system and the carbonate buffer system.

10. A reference solution for the concurrent calibration of electrodes according to claim 5, wherein said ionic strength is in a range of from 0.15 to 0.17.

11. A reference solution for the concurrent calibration of electrodes according to claim 5, which is sealed into a glass ampoule.

6

# F I G. I

EP 0 364 948 A2